# EUROPÄISCHE PATENTSCHRIFT

(11) **EP 3 756 053 B1**
(45) Veröffentlichungstag und Bekanntmachung des Hinweises auf die Patenterteilung: **03.06.2026**
(21) Anmeldenummer: 20700772.5
(22) Anmeldetag: 09.01.2020
(51) Int. Cl.: G05B 19/042

(54) **VERFAHREN UND SYSTEM ZUR ERFASSUNG VON MASCHINENDATEN**
METHOD AND SYSTEM FOR COLLECTING MACHINE DATA
PROCÉDÉ ET SYSTÈME D'ACQUISITION DE DONNÉES DE MACHINE

(30) Priorität: 17.01.2019 DE 102019101132
(43) Veröffentlichungstag der Anmeldung: 30.12.2020
(73) Patentinhaber: Technische Hochschule Deggendorf, 94469 Deggendorf (DE)
(72) Erfinder: SCHWEIGER, Florian, 93426 Roding (DE); FUCHS, Ilja, 94336 Hunderdorf (DE); GRZEMBA, Andreas, 94469 Deggendorf (DE)
(74) Vertreter: Wolf, Gerhard
(86) Internationale Anmeldenummer: PCT/EP2020/050372
(87) Internationale Veröffentlichungsnummer: WO 2020/148142

(56) Entgegenhaltungen:
- EP-A2- 2 003 815
- JP-A- 2008 305 259
- US-A1- 2017 169 593
- US-A1- 2017 249 731
- US-A1- 2018 023 837
- US-A1- 2018 040 123
- US-A1- 2018 096 205

## Beschreibung

Die Erfindung betrifft ein Verfahren und ein System zur Erfassung von Maschinendaten.

Der Maschinenpark von Unternehmen ist häufig inhomogen, d.h. umfasst Maschinen unterschiedlicher Hersteller bzw. Typen. Zudem weisen die Maschinen häufig ein unterschiedliches Alter auf, so dass große technologische Unterschiede zwischen der Maschinentechnik, insbesondere der Steuerungstechnik, der einzelnen Maschinen bestehen.

Aufgrund dieser Inhomogenität des Maschinenparks lassen sich häufig Maschinen nicht in eine vollautomatisierte Prozessüberwachung einbinden, da dazu aktuelle Maschinendaten bzw. Prozessdaten von den Maschinen ausgelesen werden müssten, diese Maschinen jedoch nicht die dafür erforderlichen Schnittstellen zur Ausgabe der Maschinendaten bzw. Prozessdaten aufweisen.

Die Druckschrift US 2017/0169593 A1 offenbart ein System zur Sammlung und Validierung von Daten von Displays.

Die Druckschrift US 2017/0249731 A1 offenbart ein Monitoring-System mit einer Bildanalyse von Fotos.

Die Druckschrift US 2018/0023837 A1 offenbart ein Verfahren zur Übertragung von Einstellungen eines ersten Gebäudekontrollers zu einem weiteren Gebäudekontroller.

Die Druckschrift JP 2008 305259 A offenbart ein Datensammelsystem zur Sammlung von Operationsdaten einer Produktionsstätte.

Die Druckschrift EP2003815 A2 offenbart die Verwendung eines Signalteilers im Kontext eines Prozesssteuerungsrechners.

Ausgehend hiervon ist es Aufgabe der Erfindung, ein Verfahren zur Erfassung von Maschinendaten anzugeben, das eine technisch einfache und sichere Erfassung von Maschinen- bzw. Prozessdaten bei unterschiedlichen Maschinentypen bzw. unterschiedlichen Maschinensteuerungen ermöglicht.

Die Aufgabe wird durch die Merkmale des unabhängigen Patentanspruchs 1 gelöst. Bevorzugte Ausführungsformen sind Gegenstand der Unteransprüche. Ein System zur Erfassung von Maschinendaten ist Gegenstand des nebengeordneten Patentanspruchs 11

Gemäß einem ersten Aspekt bezieht sich die Erfindung auf ein Verfahren zur Erfassung von Maschinendaten einer Maschine. Das Verfahren umfasst die folgenden Schritte:
Zunächst werden die an einer grafischen Benutzerschnittstelle einer Maschine angezeigten Bildinformationen erfasst. Unter "Erfassen von Bildinformationen" wird dabei verstanden, dass diese durch eine geeignete bildaufnehmende Einheit an der grafischen Benutzerschnittstelle optisch erfasst werden oder dass elektrische Signale, die Bildinformationen enthalten und beispielsweise zwischen der Maschine und deren grafischen Benutzerschnittstelle übertragen werden, erfasst werden. Diese erfassten Informationen werden an eine Rechnereinheit übertragen, um diese in geeigneter Weise weiterzuverarbeiten.

Anschließend werden die erfassten Informationen oder davon abgeleitete Informationen maskiert, um Datenbereiche festzulegen. "Davon abgeleitete Informationen" bedeutet hierbei Informationen, die aus den erfassten Informationen durch eine informationstechnische Weiterverarbeitung erhalten wurden. Das Maskieren kann beispielsweise basierend auf einer Datenmaske erfolgen, die angibt, an welcher örtlichen Position auf der grafischen Benutzerschnittstelle bzw. an welcher Stelle in den erfassten Informationen oder davon abgeleiteten Informationen welche Daten erfassbar sind.

Anschließend werden alphanummerische Zeichen durch ein Texterkennungsprogramm aus zumindest einem Datenbereich extrahiert. Dabei bedeutet "extrahiert", dass die erfassten Bildinformationen in zumindest einem Datenbereich mittels eines Texterkennungsprogramms analysiert und die in diesem Datenbereich erkannten Informationen in ein oder mehrere Buchstaben und/oder Zahlen umgewandelt werden. Dies kann beispielsweise mittels einer OCR-Erkennung (OCR: optical character recognition) erfolgen.

Danach werden die extrahierten alphanummerischen Zeichen in eine Datenstruktur geschrieben. Die Datenstruktur kann jegliche Struktur bzw. jeglicher Datensatz sein, in die die extrahierten alphanummerischen Zeichen eingefügt werden können. Die Datenstruktur wird abgespeichert oder ausgegeben.

Erfindungsgemäß werden die Bildinformationen periodisch zu unterschiedlichen Zeitpunkten erfasst, so dass die erfassten Informationen einen Informationsgehalt über die zeitliche Veränderung der Bildinformationen aufweisen, wobei das Erfassen der Bildinformationen ein Erfassen der zwischen einer grafischen Ausgangsschnittstelle der Maschine und der grafischen Benutzerschnittstelle übertragenen elektrischen Bildinformationssignale umfasst.

Ergänzend sei darauf hingewiesen, dass die Erfindung nicht auf eine ausschließliche Extraktion von alphanummerischen Zeichen begrenzt ist. Vielmehr können auch Grafikausschnitte bzw. Bildbestandteile aus den Bildinformationen extrahiert und in der Datenstruktur abgespeichert werden. Dies bietet beispielsweise die Möglichkeit, dass an einer Überwachungsstelle die Korrektheit des aktuellen Fertigungsprogramms durch die Visualisierung des an der Anlage vorhandenen 3D-Models überprüft werden könnte.

Der wesentliche Vorteil des erfindungsgemäßen Verfahrens besteht darin, dass Informationen, die an der graphischen Benutzerschnittstelle zur Anzeige gebracht werden, dazu herangezogen werden, Maschinendaten zu erfassen und in einer Datenstruktur abzuspeichern, um diese später weiterverarbeiten zu können, beispielsweise in Form einer automatischen Prozessüberwachung und/oder Prozessanalyse. Dadurch können Prozessdaten von Maschinen unterschiedlichster Typen auf technisch einfache und sichere Weise automatisiert erfasst und weiterverarbeitet werden.

Gemäß der beanspruchten Erfindung werden die Bildinformationen periodisch zu unterschiedlichen Zeitpunkten erfasst, so dass die erfassten Informationen einen Informationsgehalt über die zeitliche Veränderung der Bildinformationen aufweisen. In gleicher Weise erfolgen die periodische Extraktion von alphanummerischen Zeichen und das Schreiben der extrahierten Zeichen in die Datenstruktur. Dadurch kann über den zeitlichen Verlauf der erfassten Informationen auf die zeitliche Veränderung der Maschinendaten rückgeschlossen werden.

Gemäß einem Ausführungsbeispiel erfolgt die Erfassung der Bildinformationen durch eine Abtastung mit einer vorgegebenen Abtastfrequenz. Dadurch können Maschinendaten periodisch erfasst und in die Datenstruktur geschrieben werden.

Gemäß einem Ausführungsbeispiel kann das Erfassen der Bildinformationen ein Aufnehmen der an der grafischen Benutzerschnittstelle angezeigten Bildinformationen mittels einer Kamera umfassen.

Durch eine Kamera können die auf der grafischen Benutzerschnittstelle dargestellten Bildinformationen ebenfalls in elektrische Signale umgewandelt und an die Rechnereinheit übertragen werden, um durch diese Rechnereinheit weiterverarbeitet zu werden.

Gemäß der beanspruchten Erfindung umfasst das Erfassen der Bildinformationen ein Erfassen der zwischen einer grafischen Ausgangsschnittstelle der Maschine und der grafischen Benutzerschnittstelle übertragenen elektrischen Bildinformationssignale. Beispielsweise kann in die Kabelverbindung zwischen der grafischen Ausgangsschnittstelle und der grafischen Benutzerschnittstelle ein Signalteiler eingebracht werden, der eine Eingangsschnittstelle und mehrere Ausgangsschnittstellen hat, wobei eine Ausgangsschnittstelle mit der grafischen Benutzerschnittstelle und eine andere Ausgangsschnittstelle mit der Rechnereinheit verbunden wird. Die Bildinformationssignale können beispielsweise VGA-Signale, DVI-Signale, DisplayPort-Signale oder HDMI-Signale sein. Dadurch können die direkt an die grafische Benutzerschnittstelle übertragenen Bildinformationssignale durch die Rechnereinheit weiterverarbeitet werden, was Vorteile hinsichtlich der Erfassungsqualität und Erfassungssicherheit bietet.

Gemäß einem Ausführungsbeispiel werden die erfassten Informationen oder davon abgeleitete Informationen vor dem Extrahieren von alphanummerischen Zeichen mittels zumindest eines Bildbearbeitungsprogramms aufbereitet. Die Aufbereitung kann beispielsweise eine Filterung, eine Kontrastveränderung, eine Farbveränderung und/oder eine Farbkontrastveränderung sein, wobei die Kontrastveränderung bzw. die Farbkontrastveränderung eine Kontrasterhöhung bzw. die Farbkontrasterhöhung oder eine Kontrastreduzierung bzw. die Farbkontrastreduzierung sein kann. Dadurch kann die Fehlerrate bei der Extraktion der alphanummerischen Zeichen reduziert werden.

Gemäß einem Ausführungsbeispiel werden nach der Texterkennung die erfassten Informationen in einem Prüfschritt verifiziert. Durch den Verifikationsschritt kann das Risiko, dass Fehler bei der Texterkennung passieren und daher fehlerhafte Informationen in die Datenstruktur geschrieben werden, entscheidend reduziert werden.

Gemäß einem Ausführungsbeispiel wird bei der Prüfung der erfassten Informationen ermittelt, ob sich die Werte von zeitlich aufeinanderfolgend erfassten Informationen stärker als einen vorgegebenen Veränderungsschwellwert verändern. Für den Fall, dass der Veränderungsschwellwert überschritten wird, kann dies darauf zurückzuführen sein, dass eine fehlerhafte Informationserfassung bzw.

Texterkennung erfolgt ist, da die Veränderungen üblicherweise unterhalb dieses Veränderungsschwellwerts liegen.

Gemäß einem Ausführungsbeispiel wird im Rahmen des Prüfschritts ermittelt, ob sich bei Veränderung von Bildverarbeitungsparametern, insbesondere bei Änderung von Parametern einer Filterung, Kontrasterhöhung etc. eine Änderung der extrahierten alphanummerischen Zeichen ergibt. Wenn eine solche Veränderung von Bildverarbeitungsparametern, insbesondere eine betragsmäßig kleine Veränderung, ein signifikant anderes Extraktionsergebnis nach sich zieht, kann davon ausgegangen werden, dass bereits kleine Veränderungen in der Erfassungsqualität zu fehlerhaften Extraktionsergebnissen führen.

Gemäß einem Ausführungsbeispiel sind zur Erfassung von Maschinendaten unterschiedlicher Maschinentypen in der Rechnereinheit mehrere Datensätze hinterlegt. Jeder Datensatz ist einem oder mehreren Maschinentypen zugeordnet und kann Informationen zum Maskieren der erfassten Informationen, zum Filtern der erfassten Informationen, zur Schriftart und/oder zur Schriftgröße umfassen. Dadurch kann abhängig von dem Maschinentyp, dessen Maschinendaten erfasst werden sollen, ein diesem Maschinentyp zugeordneter Datensatz ausgewählt werden, um die erfassten Informationen zu maskieren und weiterzuverarbeiten.

Gemäß einem Ausführungsbeispiel sind an der grafischen Benutzerschnittstelle mehrere unterschiedliche Seiten mit jeweils unterschiedlichen Bildinformationen anzeigbar und es erfolgt ein Umschalten zwischen den Seiten, um die Bildinformationen der unterschiedlichen Seiten zu erfassen. Durch das Umschalten kann insbesondere ein sequentielles Durchlaufen der Seiten bewirkt werden, um die auf diesen Seiten jeweils dargestellten Informationen als Maschinendaten erfassbar zu machen und nach dem Schreiben in die Datenstruktur weiterverarbeiten zu können.

Gemäß einem weiteren Aspekt betrifft die Erfindung ein System zur Erfassung von Maschinendaten. Das System umfasst eine Erfassungseinheit, mittels der an einer grafischen Benutzerschnittstelle einer Maschine angezeigte Bildinformationen erfassbar sind. Eine Erfassungseinheit kann beispielsweise, wie zuvor beschrieben, durch einen Signalteiler gebildet werden. Das System umfasst des Weiteren eine Rechnereinheit, die mit der Erfassungseinheit gekoppelt ist und die zum Empfang der von der Erfassungseinheit erfassten Informationen ausgebildet ist. Die Rechnereinheit ist dabei dazu ausgebildet, die erfassten Informationen oder davon abgeleitete Informationen zur Festlegung von Datenbereichen zu maskieren, alphanummerische Zeichen aus zumindest einem Datenbereich durch ein Texterkennungsprogramm zu extrahieren und die extrahierten alphanummerischen Zeichen in eine Datenstruktur zu schreiben oder die extrahierten alphanummerischen Zeichen in einem Datenstrom auszugeben. Die Rechnereinheit ist weiterhin dazu ausgebildet, die Bildinformationen periodisch zu unterschiedlichen Zeitpunkten zu erfassen, so dass die erfassten Informationen einen Informationsgehalt über die zeitliche Veränderung der Bildinformationen aufweisen, wobei die Erfassungseinheit dazu ausgebildet ist, die zwischen einer grafischen Ausgangsschnittstelle der Maschine und der grafischen Benutzerschnittstelle übertragenen elektrischen Bildinformationssignale zu erfassen.

Gemäß einem Ausführungsbeispiel des Systems weist die Rechnereinheit eine oder mehrere Dateneingangsschnittstellen auf, über die die Rechnereinheit mit einer oder mehreren Erfassungseinheiten koppelbar ist. Im Falle von mehreren Dateneingangsschnittstellen kann die Rechnereinheit Informationen von grafischen Benutzerschnittstellen mehrerer Maschinen parallel empfangen und weiterverarbeiten.

Gemäß einem Ausführungsbeispiel weist die Rechnereinheit eine oder mehrere Datenausgangsschnittstellen auf, über die eine Ausgabe einer Datenstruktur enthaltend alphanummerische Zeichen oder eines Datenstroms von alphanummerischen Zeichen erfolgt. Dabei können an den Datenausgangsschnittstellen jeweils nach Maschinen getrennt, deren Maschinendaten durch die Rechnereinheit empfangen und weiterverarbeitet werden bzw. Datenstrukturen ausgegeben werden. Alternativ ist es möglich, dass lediglich eine Datenausgangsschnittstelle vorgesehen ist und dass an dieser Datenausgangsschnittstelle - falls durch die Rechnereinheit Informationen von grafischen Benutzerschnittstellen mehrerer Maschinen parallel empfangen und weiterverarbeitet werden - Datenstrukturen ausgegeben werden, die eine eindeutige Kennung aufweisen, wobei die Kennung angibt, welcher Maschine die jeweilige Datenstruktur zugeordnet ist. Des Weiteren ist es auch möglich, dass in einer Datenstruktur, beispielsweise einer Tabelle, Maschinendaten von verschiedenen Maschinen enthalten sind, wobei die Maschinendaten der verschiedenen Maschinen beispielsweise durch die Anordnung in Zeilen und Spalten voneinander unterscheidbar sind.

Gemäß einem Ausführungsbeispiel ist jeder Dateneingangsschnittstelle und jeder Datenausgangsschnittstelle jeweils eine Maschine zugeordnet. Dadurch können die Informationen der einzelnen Maschinen an den jeweiligen Dateneingangsschnittstellen parallel empfangen und die jeweiligen den Maschinen zugeordneten Datenstrukturen an den Datenausgangsschnittstellen voneinander getrennt parallel ausgegeben werden.

Gemäß einem Ausführungsbeispiel weist die Rechnereinheit eine Umschaltschnittstelle zur Bereitstellung eines Umschaltsignals auf, mittels dem eine Umschaltung zwischen Seiten der grafischen Benutzerschnittstelle einer Maschine erfolgt. Dadurch kann durch die Rechnereinheit ein Umschalten der Seiten und ein Verarbeiten der auf diesen Seiten angezeigten Informationen bewirkt werden.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Offenbarung unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: beispielhaft und schematisch ein erstes Ausführungsbeispiel eines Systems zur Erfassung von Maschinendaten;
- Fig. 2: beispielhaft und schematisch ein zweites, nicht beanspruchtes Beispiel eines Systems zur Erfassung von Maschinendaten;
- Fig. 3: beispielhaft ein Blockdiagramm, das die Schritte eines Verfahrens zum Erfassen von Maschinendaten veranschaulicht;
- Fig. 4: beispielhaft eine Anzeige an einer grafischen Benutzerschnittstelle umfassend mehrere Datenbereiche;
- Fig. 5: beispielhaft mehrere Seiten einer Anzeige an einer grafischen Benutzerschnittstelle; und
- Fig. 6: beispielhaft und schematisch der Aufbau einer Rechnereinheit zur Verarbeitung von erfassten Informationen einer Maschine.

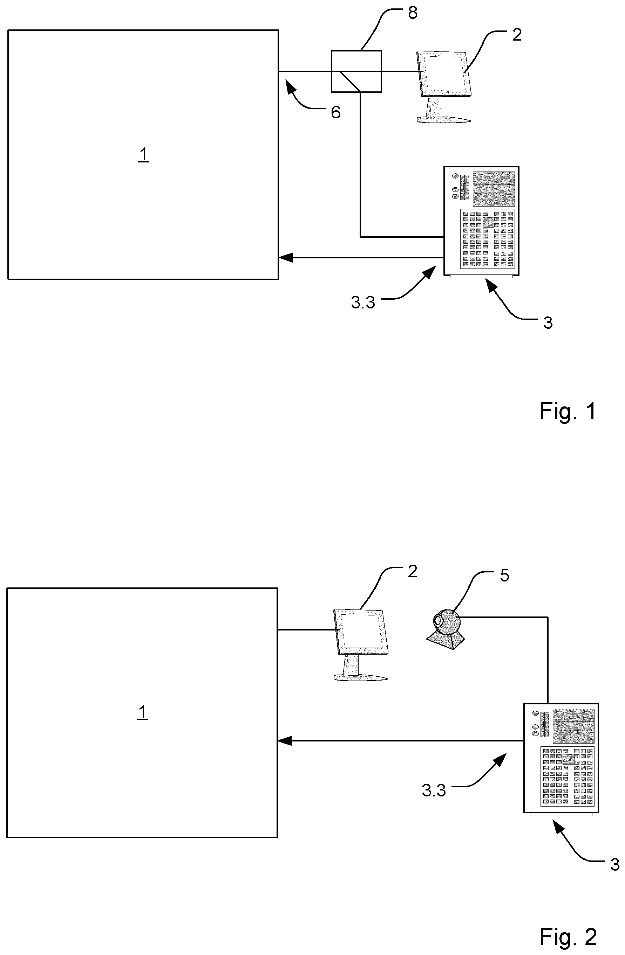

Figur 1 zeigt ein erstes Ausführungsbeispiel eines Systems zur Erfassung von Maschinendaten einer Maschine 1. Die Maschine 1 kann insbesondere eine Werkzeugmaschine sein.

Die Maschine 1 umfasst eine grafische Benutzerschnittstelle 2, über die Maschineninformationen grafisch ausgeben werden, so dass ein Maschinenbediener diese optisch wahrnehmen kann. Die grafische Benutzerschnittstelle 2 kann insbesondere ein Display bzw. einen Monitor umfassen.

Die grafische Benutzerschnittstelle 2 ist beispielsweise über eine entsprechende Leitungsverbindung mit einer grafischen Ausgangsschnittstelle 6 der Maschine 1 gekoppelt. Die grafischen Ausgangsschnittstelle 6 kann insbesondere durch eine Buchse gebildet sein, an der ein invers ausgebildeter Stecker der Leitungsverbindung ansteckbar ist, um die von der grafischen Ausgangsschnittstelle 6 bereitgestellten Informationen an die grafische Benutzerschnittstelle 2 übertragen zu können. Die grafische Ausgangsschnittstelle 6 kann beispielsweise eine VGA-Schnittstelle, eine HDMI-Schnittstelle, eine DVI-Schnittstelle oder eine sonstige Grafik- oder Multimedia-Schnittstelle sein.

Zur Erfassung der an der grafischen Benutzerschnittstelle 2 angezeigten Bildinformationen ist ein Signalteiler 8 vorgesehen. Der Signalteiler 8 ist eingangsseitig mit der grafischen Ausgangsschnittstelle 6 verbunden und weist zumindest zwei Ausgangsschnittstellen auf, wobei eine erste Ausgangsschnittstelle mit der grafische Benutzerschnittstelle 2 und eine zweite Ausgangsschnittstelle mit einer Rechnereinheit 3 gekoppelt ist.

Damit können an der Rechnereinheit 3 die gleichen elektrischen Grafiksignale empfangen werden, die auch an die grafische Benutzerschnittstelle 2 übertragen werden, um diese dort zur Anzeige zu bringen.

Fig. 2 zeigt eine zu Fig. 1 alternative und nicht beanspruchte Ausführungsform, die sich von der Ausführungsform gemäß Fig. 1 dadurch unterscheidet, dass nicht das zwischen der grafischen Ausgangsschnittstelle 6 und der grafischen Benutzerschnittstelle 2 übertragene Signal gesplittet und der gesplittete Anteil an die Rechnereinheit übertragen wird, sondern die Anzeige auf der grafischen Benutzerschnittstelle 2 mittels einer Kamera 5 aufgenommen und das Ausgangssignal dieser Kamera 5 an die Rechnereinheit 3 übertragen wird. Bei der nicht beanspruchten Ausführungsform gemäß Fig. 2 wird als Erfassungseinheit eine Kamera 5 anstelle eines Signalteilers 8 verwendet.

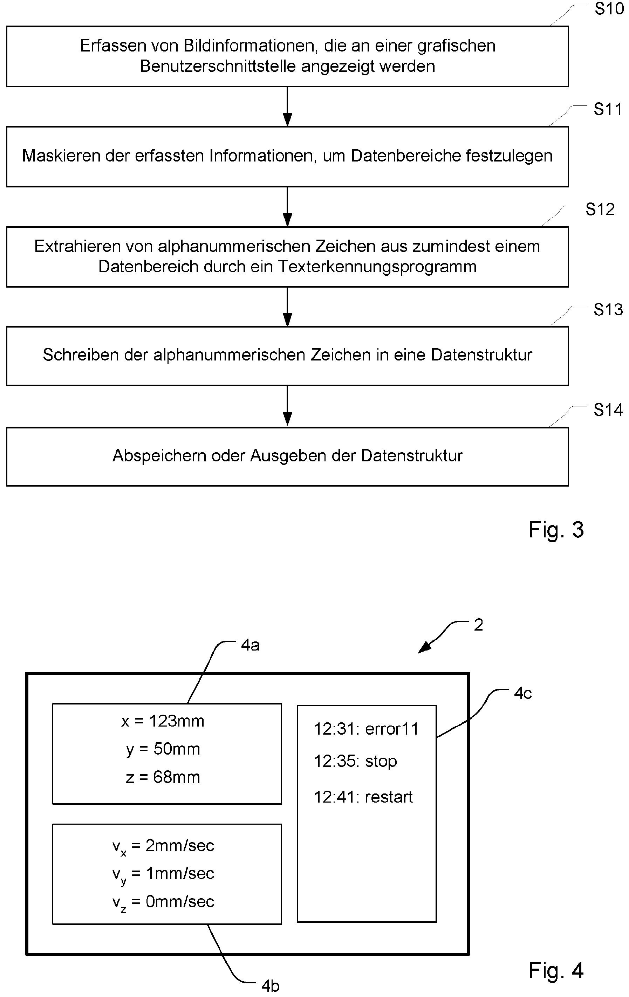

Nachfolgend wird anhand des Blockdiagramms in Fig. 3 das Verfahren zur Erfassung von Maschinendaten näher beschrieben.

Zunächst werden Bildinformationen, die an einer grafischen Benutzerschnittstelle 2 einer Maschine 1 angezeigt werden, erfasst (S10). Dieses Erfassen kann dabei entweder durch einen direkten Abgriff (s. Ausführungsbeispiel gemäß Fig. 1) des elektrischen Signals, das zwischen einer grafischen Ausgangsschnittstelle 6 und einer grafischen Benutzerschnittstelle 3 übertragen wird, oder durch optisches Erfassen der Anzeige der grafischen Benutzerschnittstelle 2 mittels einer Kamera 5 erfolgen (s. Ausführungsbeispiel gemäß Fig. 2) . Die erfassten Informationen werden dann an die Rechnereinheit 3 übermittelt. Die Rechnereinheit 3 ist dazu konfiguriert, die erfassten Informationen zu empfangen und zu verarbeiten.

Anschließend werden die empfangenen Daten maskiert, um zumindest einen Datenbereich in den empfangenen Daten festzulegen (S11). Dieses Maskieren wird vorzugsweise ebenfalls durch die Rechnereinheit 3 vollzogen. Unter "Maskieren" im Sinne der Erfindung wird dabei verstanden, dass die empfangenen Informationen mit einer Datenmaske verglichen werden, wobei die Datenmaske mehrere Datenbereiche definiert und vorzugsweise angibt, welche Art von Daten in welchen Datenbereichen zu finden sind.

Fig. 4 zeigt beispielhaft eine Anzeige auf einer grafischen Benutzerschnittstelle 2, anhand derer nachfolgend der Schritt des Maskierens der erfassten Informationen beschrieben wird. Die Anzeige umfasst mehrere, im gezeigten Ausführungsbespiel drei Datenbereiche 4a, 4b, 4c. Im ersten Datenbereich 4a wird beispielsweise die aktuelle Position des Werkzeugs bzw. des Bearbeitungskopfs der Maschine 1 mittels xyz-Koordinaten angezeigt. Der zweite Datenbereich 4b zeigt beispielsweise aktuelle Geschwindigkeitswerte des Werkzeugs bzw. des Bearbeitungskopfs der Maschine 1 entlang der jeweiligen Raumachse (vₓ: Geschwindigkeit entlang der x-Achse, v_{y}: Geschwindigkeit entlang der y-Achse; v_{z}: Geschwindigkeit entlang der z-Achse) und der dritte Datenbereich 4c zeigt Zeitpunkte und die jeweiligen zu diesen Zeitpunkten eingetretenen Ereignisse. Es versteht sich, dass der beschriebene Anzeigeinhalt lediglich beispielhaft ist und die Erfindung nicht auf einen bestimmten Anzeigeinhalt beschränkt ist.

Über die Datenmaske, die vorzugsweise einer bestimmten Maschine 1 und weiterhin vorzugsweise einer bestimmten, auf der grafischen Benutzerschnittstelle 2 angezeigten Seite zugeordnet ist, kann ermittelt werden, an welcher Stelle der erfassten Information welche Dateninhalte zu finden sind. So enthält die zur Anzeige gemäß Fig. 4 gehörige Datenmaske Informationen darüber, dass in dem ersten Datenbereich 4a aktuelle Positionsdaten des Werkzeugs bzw. des Bearbeitungskopfs der Maschine 1 angezeigt werden. Weiterhin kann die Datenmaske Informationen enthalten, dass in der ersten Zeile des ersten Datenbereichs 4a die x-Koordinaten des Werkzeugs bzw. des Bearbeitungskopfs, in der zweiten Zeile des ersten Datenbereichs 4a die y-Koordinaten des Werkzeugs bzw. des Bearbeitungskopfs und in der dritten Zeile des ersten Datenbereichs 4a die z-Koordinaten des Werkzeugs bzw. des Bearbeitungskopfs jeweils in [mm] angezeigt werden.

In gleicher Weise gibt die Datenmaske an, welche Informationen in den Datenbereichen 4b und 4c zu finden sind.

Basierend auf der Datenmaske ist es damit möglich, nach dem Extrahieren von Informationen diese Informationen bestimmten Datenfeldern einer zu erstellenden Datenstruktur zuzuordnen. So kann beispielsweise der Wert 123mm, der die x-Position des Werkzeugs bzw. des Bearbeitungskopfs zu einem bestimmten Zeitpunkt angibt, in die Datenstruktur an der entsprechenden Zeile/Spalte, die für die x-Positionswerte vorgesehen ist, eingefügt werden.

Nach dem Maskieren der Informationen werden alphanummerische Zeichen aus zumindest einem Datenbereich 4a, 4b, 4c extrahiert, und zwar durch Texterkennung, insbesondere ein OCR-Programm (OCR: optical character recognition) (S12). In anderen Worten werden aus den Bildinformationen, die Bildpunkte und diesen Bildpunkten zugeordnete Farbwerte enthalten, Zeichen bzw. Zeichenketten extrahiert, und zwar vorzugsweise basierend auf den Informationen (z.B. Schriftart, Schriftgröße etc.), die die jeweilige Datenmaske bereitstellt.

Diese extrahierten alphanummerischen Zeichen werden dann in eine Datenstruktur geschrieben (S13). Diese Datenstruktur kann beispielsweise eine Tabelle sein, die Datenfelder enthält, die den durch die Datenmaske vorgegebenen Datenbereichen entsprechen. Weitere Beispiele für eine Datenstruktur können eine Textdatei, ein Datensatz einer Datenbank etc. sein.

Die Datenstruktur wird anschließend abgespeichert oder aber an einer Datenausgangsschnittstelle der Rechnereinheit 3 ausgegeben.

Im Betrieb einer Maschine 1 können sich die auf der grafischen Benutzerschnittstelle 2 angezeigten Bildinformationen über die Zeit ändern. Um diese zeitliche Änderung der Bildinformation verfolgen zu können, werden die Bildinformationen fortlaufend erfasst und durch die Rechnereinheit 3, wie vorher beschrieben, verarbeitet. Die fortlaufende Erfassung erfolgt periodisch ähnlich einer Signalabtastung mit einer festen oder -abhängig vom Maschinenprogramm - variabel einstellbaren Erfassungs- bzw. Abtastfrequenz.

Um das Extraktionsergebnis zu verbessern, kann es nötig sein, vor dem Extraktionsschritt eine Bearbeitung der erfassten Informationen vorzunehmen. Diese Bearbeitung kann vor oder nach dem Maskieren der erfassten Informationen erfolgen.

Die Bearbeitung kann beispielsweise ein Filtern und/oder eine Kontrastveränderung umfassen. Vorzugsweise wird das Bearbeiten mittels eines Bildverarbeitungsprogramms vorgenommen. Durch das Bearbeiten der erfassten Informationen kann beispielsweise ein Rauschen im Bild reduziert und/oder der Farbkontrast erhöht werden. Mittels des Bearbeitens ist es damit möglich, die erfassten Informationen für die Zeichenextraktion durch das Texterkennungsprogramm aufzubereiten, so dass eine Texterkennung mit möglichst geringer Erkennungsfehlerrate erreicht wird.

Die Anzeigen an der grafischen Benutzerschnittstelle können abhängig von der Maschine 1 bzw. dem Maschinentyp variieren. So können beispielsweise unterschiedliche Schriftarten und/oder Schriftgrößen verwendet werden. Zudem können die Anzeigeinhalte abhängig von der Maschine 1 bzw. dem Maschinentyp variieren. Um sicherzustellen, dass das Maskieren bzw. die Texterkennung auf die jeweilige Maschine 1 bzw. den Maschinentyp angepasst erfolgt, kann die Rechnereinheit mehrere Datensätze umfassen, wobei jeder Datensatz einer Maschine 1 bzw. einem Maschinentyp zugeordnet ist. Abhängig von der Maschine 1 bzw. dem Maschinentyp kann dann der dieser Maschine 1 bzw. diesem Maschinentyp zugeordnete Datensatz verwendet werden, um eine angepasste Maskierung bzw. Zeichenextraktion vorzunehmen.

Um sicherzustellen, dass die Extraktion alphanummerischer Zeichen mittels des Texterkennungsprogramms fehlerfrei oder im Wesentlichen fehlerfrei abläuft, kann ein Prüfschritt vollzogen werden. Bei diesem Prüfschritt können zeitlich nacheinander, insbesondere unmittelbar zeitlich nacheinander extrahierte alphanummerische Zeichen miteinander verglichen und die Veränderung der alphanummerische Zeichen beurteilt werden. Insbesondere kann die betragsmäßige Veränderung von zeitlich nacheinander, insbesondere unmittelbar zeitlich nacheinander extrahierten Zahlenwerten ermittelt und mit einem Schwellwert verglichen werden. Für den Fall, dass die betragsmäßige Veränderung den Schwellwert übersteigt, kann auf eine fehlerhafte Extraktion rückgeschlossen werden.

Alternativ oder zusätzlich ist es möglich, während des Prüfschritts die Filtercharakteristika eines Filters, mittels dem eine Bildbearbeitung vollzogen wird, zu verändern und zu prüfen, ob sich ein verändertes Extraktionsergebnis ergibt. Wenn sich beispielsweise bereits bei geringer Veränderung der Filtercharakteristika eine signifikante Veränderung des Extraktionsergebnisses ergibt, kann darauf rückgeschlossen werden, dass bereits geringe Veränderungen bei den Bildinformationen ebenfalls zu Veränderungen des Extraktionsergebnisses und damit zu einer fehlerhaften Extraktion von alphanummerischen Zeichen führen.

Als Reaktion auf das Prüfungsergebnis können beispielsweise Einstellungen des Bildbearbeitungsprogramms, beispielsweise Filterkriterien geändert werden oder es kann eine Veränderung der Erkennungsparameter des Texterkennungsprogramms vorgenommen werden. Eine weitere alternative oder zusätzliche Reaktion auf das Prüfungsergebnis kann darin bestehen, die Auflösung der Grafikaufnahme zu verändern. Dadurch kann beispielsweise eine Verzerrung der alphanummerischen Zeichen, die durch eine Interpolation zur Auflösungsanpassung an Zielsystem entstehen kann, gemindert bzw. durch korrekte Auswahl vollständig vermieden werden.

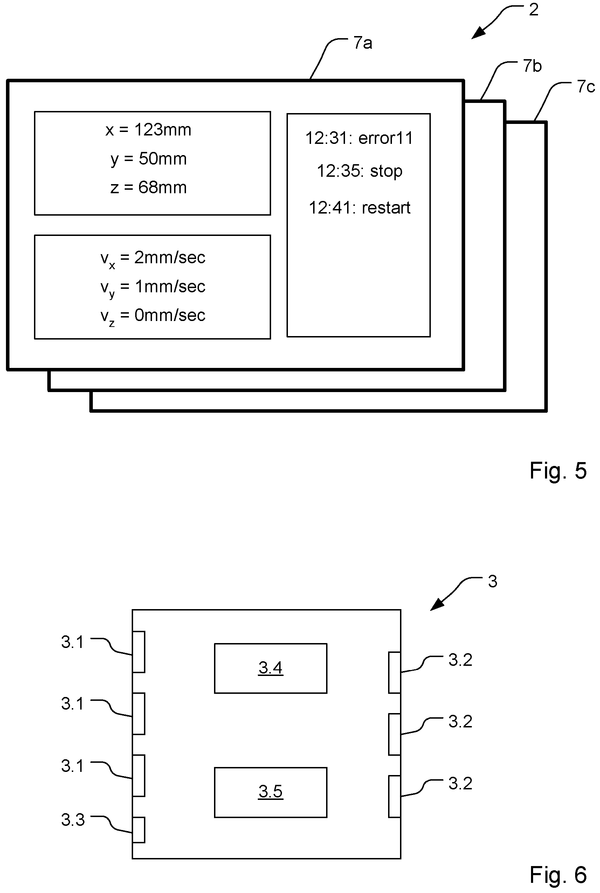

In Fig. 5 sind mehrere Seiten 7a, 7b, 7c skizziert, die auf einer grafischen Benutzerschnittstelle darstellbar sind. Beispielsweise kann in der Steuerungssoftware der Maschine 1 eine Umschaltoption vorgesehen sein, mittels der abhängig von der jeweiligen Steuerungs- bzw. Prüfaufgabe des Maschinenbedienpersonals eine dieser Seiten 7a, 7b, 7c auf der grafischen Benutzerschnittstelle angezeigt wird.

Um die auf den jeweiligen Seiten 7a, 7b, 7c dargestellten Informationen erfassen zu können, ist es vorteilhaft, dass zwischen den Seiten 7a, 7b, 7c umgeschaltet wird. Vorzugsweise erfolgt das Umschalten derart, dass in einem zyklischen Durchlauf die Seiten 7a, 7b, 7c zur Anzeige gelangen, so dass die Seiten 7a, 7b, 7c nacheinander erfasst werden können. Das Umschalten der Seiten 7a, 7b, 7c wird vorzugsweise durch ein von der Rechnereinheit 3 bereitgestelltes Umschaltsignal bewirkt, das an die Maschine 1 bzw. deren Maschinensteuerung übertragen wird, so dass dieses Umschaltsignal das Umschalten der Seiten 7a, 7b, 7c auslöst.

Um dem Benutzer der Maschine 1 trotz des Umschaltens der Seiten 7a, 7b, 7c die Möglichkeit zu geben, eine bestimmte Seite auf einem Monitor bzw. einem Display betrachten zu können, kann die Rechnereinheit eine graphische Ausgangsschnittstelle bereitstellen, an der eine Seite 7a, 7b, 7c der umgeschalteten Seiten zur Anzeige gebracht wird. Dabei kann beispielsweise je nach Anzahl der umgeschalteten Seiten jeweils nur jeweils ein bestimmter Teil der an der Rechnereinheit 3 empfangenen Bildinformationen auf diesem Monitor bzw. Display zur Anzeige gebracht werden, so dass aus den umgeschalteten Seiten 7a, 7b, 7c beispielsweise nur die Bildinformationen der Seite 7a zur Anzeige gelangen.

Eine weitere Möglichkeit, dem Benutzer der Maschine 1 trotz des Umschaltens der Seiten 7a, 7b, 7c die Möglichkeit zu geben, eine bestimmte Seite auf einem Monitor bzw. einem Display betrachten zu können, besteht darin, dass die automatischen Seitenwechsel nur durchgeführt werden, wenn sich die Anlage im Arbeitsbetrieb befindet, d.h. ein Indikator aktiv ist, der auf den aktiven Betrieb der Maschine 1 schließen lässt.

Eine nochmals weitere Möglichkeit, dem Benutzer der Maschine 1 trotz des Umschaltens der Seiten 7a, 7b, 7c die Möglichkeit zu geben, eine bestimmte Seite auf einem Monitor bzw. einem Display betrachten zu können, besteht darin, dass das Maschinenpersonal durch eine Eingabe an einer Benutzerschnittstelle, beispielsweise durch Tastendruck, die automatische Durchschaltung für einen gewissen Zeitraum unterbrechen kann, um im Aktivbetrieb den Status der Maschine 1 selbst visuell prüfen zu können. Nach Ablauf dieses Zeitraums erfolgt wieder eine automatische Durchschaltung.

Fig. 6 zeigt beispielhaft eine Rechnereinheit 3, die in einem System zur Erfassung von Maschinendaten verwendet werden kann. Die Rechnereinheit 3 umfasst zumindest einen Prozessor 3.4 und eine Speichereinheit 3.5. Der Prozessor ist dazu konfiguriert, das Maskieren der erfassten Informationen und das Extrahieren der alphanummerischen Zeichen durch ein Texterkennungsprogramm vorzunehmen. Die Speichereinheit 3.5 ist dazu ausgebildet, die Datenstruktur, in die die extrahierten alphanummerischen Zeichen geschrieben werden, zumindest temporär zu speichern.

Die Rechnereinheit 3 weist zumindest eine, im gezeigten Ausführungsbeispiel drei Dateneingangsschnittstellen 3.1 auf. Jede Dateneingangsschnittstelle 3.1 ist dazu ausgebildet, mit einer Erfassungseinheit, beispielsweise einem Signalteiler 8 oder einer Kamera 5, verbunden zu werden, um die an der grafischen Benutzerschnittstelle 2 angezeigten Informationen zu empfangen. Die Rechnereinheit 3 kann lediglich eine einzige Dateneingangsschnittstelle 3.1 aufweisen, um an der grafischen Benutzerschnittstelle 2 angezeigte Informationen einer einzigen Maschine 1 empfangen und verarbeiten zu können. Alternativ ist es möglich, dass die Rechnereinheit 3 mehrere Dateneingangsschnittstellen 3.1 aufweist, um an der grafischen Benutzerschnittstelle 2 angezeigte Informationen mehrerer Maschinen 1 empfangen und verarbeiten zu können.

Die Rechnereinheit 3 weist ferner zumindest eine, im gezeigten Ausführungsbeispiel drei Datenausgangsschnittstellen 3.2 auf. An diesen Datenausgangsschnittstellen 3.2 kann jeweils eine Datenstruktur ausgegeben werden, die von der Rechnereinheit 3 erkannte alphanummerische Zeichen enthält. Die Rechnereinheit 3 kann lediglich eine einzige Datenausgangsschnittstelle 3.2 aufweisen, um eine einer einzigen Maschine 1 zugeordnete Datenstruktur ausgeben zu können. Alternativ ist es möglich, dass die Rechnereinheit 3 mehrere Datenausgangsschnittstellen 3.2 aufweist, um auf mehrere Datenausgangsschnittstellen 3.2 verteilt Datenstrukturen ausgeben zu können, die einer jeweiligen Maschine 1 zugeordnet sind. Weiterhin ist es möglich, dass die unterschiedlichen Maschinen 1 zugeordneten Datenstrukturen jeweils eine Kennung aufweisen, mittels der feststellbar ist, welcher Maschine 1 eine ausgegebene Datenstruktur zugeordnet ist. Damit ist es möglich, an einer einzigen Datenausgangsschnittstelle 3.2 Datenstrukturen auszugeben, die unterschiedlichen Maschinen 1 zugeordnet sind.

Vorzugsweise weist die Rechnereinheit 3 zudem eine Umschaltschnittstelle 3.3 auf. An dieser Umschaltschnittstelle 3.3 wird das vorbeschriebene Umschaltsignal bereitgestellt, mittels dem das Umschalten der Seiten 7a, 7b, 7c auslösbar ist.

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- 1: Maschine
- 2: grafische Benutzerschnittstelle
- 3: Rechnereinheit
- 3.1: Dateneingangsschnittstelle
- 3.2: Datenausgangsschnittstelle
- 3.3: Umschaltschnittstelle
- 3.4: Prozessor
- 3.5: Speichereinheit
- 4a, 4b, 4c: Datenbereich
- 5: Kamera
- 6: grafische Ausgangsschnittstelle
- 7a, 7b, 7c: Seite
- 8: Signalteiler

## Patentansprüche

1. Verfahren zur Erfassung von Maschinendaten einer Maschine (1) umfassend folgende Schritte:
- Erfassen von an einer grafischen Benutzerschnittstelle (2) einer Maschine (1) angezeigten Bildinformationen und Übertragen der erfassten Informationen an eine Rechnereinheit (3) (S10);
- Maskieren der erfassten Informationen oder davon abgeleiteter Informationen zur Festlegung von Datenbereichen (4a, 4b, 4c) (S11);
- Extrahieren von alphanummerischen Zeichen aus zumindest einem Datenbereich (4a, 4b, 4c) durch ein Texterkennungsprogramm (S12);
- Schreiben der alphanummerischen Zeichen in eine Datenstruktur (S13); und
- Abspeichern oder Ausgeben der Datenstruktur (S14),
wobei die Bildinformationen periodisch zu unterschiedlichen Zeitpunkten erfasst werden, so dass die erfassten Informationen einen Informationsgehalt über die zeitliche Veränderung der Bildinformationen aufweisen und wobei das Erfassen der Bildinformationen ein Erfassen der zwischen einer grafischen Ausgangsschnittstelle (6) der Maschine (1) und der grafischen Benutzerschnittstelle (2) übertragenen elektrischen Bildinformationssignale umfasst.

2. Verfahren nach Anspruch 1, **dadurch gekennzeichnet, dass** die Erfassung der Bildinformationen durch eine Abtastung mit einer vorgegebenen Abtastfrequenz erfolgt.

3. Verfahren nach einem der vorhergehenden Ansprüche, **dadurch gekennzeichnet, dass** die erfassten Informationen oder davon abgeleitete Informationen vor dem Extrahieren von alphanummerischen Zeichen mittels zumindest eines Bildbearbeitungsprogramms aufbereitet werden.

4. Verfahren nach Anspruch 3, **dadurch gekennzeichnet, dass** das Aufbereiten eine Filterung und/oder eine Kontrastveränderung, insbesondere eine Farbkontrastveränderung umfasst.

5. Verfahren nach einem der vorhergehenden Ansprüche, **dadurch gekennzeichnet, dass** nach der Texterkennung die erfassten Informationen in einem Prüfschritt verifiziert werden.

6. Verfahren nach Anspruch 5, **dadurch gekennzeichnet, dass** bei der Prüfung der erfassten Informationen ermittelt wird, ob sich die Werte von zeitlich aufeinanderfolgend erfassten Informationen stärker als einen vorgegebenen Veränderungsschwellwert verändern.

7. Verfahren nach Anspruch 5 oder 6, **dadurch gekennzeichnet, dass** im Rahmen des Prüfschritts ermittelt wird, ob sich bei Veränderung von Bildverarbeitungsparametern eine Änderung der extrahierten alphanummerischen Zeichen ergibt.

8. Verfahren nach einem der vorhergehenden Ansprüche, **dadurch gekennzeichnet, dass** zur Erfassung von Maschinendaten unterschiedlicher Maschinentypen mehrere Datensätze hinterlegt sind, wobei jeder Datensatz einem oder mehreren Maschinentypen zugeordnet ist und wobei jeder Datensatz Informationen zum Maskieren der erfassten Informationen, zum Filtern der erfassten Informationen, zur Schriftart und/oder zur Schriftgröße umfasst.

9. Verfahren nach einem der vorhergehenden Ansprüche, **dadurch gekennzeichnet, dass** an der grafischen Benutzerschnittstelle (2) mehrere unterschiedliche Seiten (7a, 7b, 7c) mit jeweils unterschiedlichen Bildinformationen anzeigbar sind und dass ein Umschalten zwischen den Seiten (7a, 7b, 7c) erfolgt, um die Bildinformationen der unterschiedlichen Seiten (7a, 7b, 7c) zu erfassen.

10. Verfahren nach einem der vorhergehenden Ansprüche, **dadurch gekennzeichnet, dass** Grafikausschnitte bzw. Bildbestandteile aus den Bildinformationen extrahiert und in der Datenstruktur abgespeichert werden.

11. System zur Erfassung von Maschinendaten, umfassend:
- eine Erfassungseinheit (8), mittels der an einer grafischen Benutzerschnittstelle (6) einer Maschine (1) angezeigte Bildinformationen erfassbar sind;
- eine Rechnereinheit (3), die mit der Erfassungseinheit (5, 8) gekoppelt ist und die zum Empfang der von der Erfassungseinheit (5, 8) erfassten Informationen ausgebildet ist;
wobei die Rechnereinheit (3) dazu ausgebildet ist, die erfassten Informationen oder davon abgeleitete Informationen zur Festlegung von Datenbereichen zu maskieren, alphanummerische Zeichen aus zumindest einem Datenbereich durch ein Texterkennungsprogramm zu extrahieren und die extrahierten alphanummerischen Zeichen in eine Datenstruktur zu schreiben oder die extrahierten alphanummerischen Zeichen in einem Datenstrom auszugeben, wobei die Rechnereinheit (3) dazu ausgebildet ist, die Bildinformationen periodisch zu unterschiedlichen Zeitpunkten zu erfassen, so dass die erfassten Informationen einen Informationsgehalt über die zeitliche Veränderung der Bildinformationen aufweisen, wobei die Erfassungseinheit dazu ausgebildet ist, die zwischen einer grafischen Ausgangsschnittstelle (6) der Maschine (1) und der grafischen Benutzerschnittstelle (2) übertragenen elektrischen Bildinformationssignale zu erfassen.

12. System nach Anspruch 11, **dadurch gekennzeichnet, dass** die Rechnereinheit (3) eine oder mehrere Dateneingangsschnittstellen (3.1) aufweist, über die die Rechnereinheit mit einer oder mehreren Erfassungseinheiten (5, 8) koppelbar ist.

13. System nach Anspruch 11 oder 12, **dadurch gekennzeichnet, dass** die Rechnereinheit (3) eine oder mehrere Datenausgangsschnittstellen (3.2) aufweist, über die eine Ausgabe einer Datenstruktur enthaltend alphanummerische Zeichen oder eines Datenstroms von alphanummerischen Zeichen erfolgt.

14. System nach Anspruch 12 oder 13, **dadurch gekennzeichnet, dass** jede Dateneingangsschnittstelle (3.1) und jede Datenausgangsschnittstelle (3.2) jeweils einer Maschine (1) zugeordnet ist.

15. System nach einem der Ansprüche 11 bis 14, **dadurch gekennzeichnet, dass** die Rechnereinheit (3) zumindest eine Umschaltschnittstelle (3.3) zur Bereitstellung eines Umschaltsignals aufweist, mittels dem eine Umschaltung zwischen Seiten (7a, 7b, 7c) der grafischen Benutzerschnittstelle (2) einer Maschine (1) erfolgt.

## Claims

1. A method for collecting machine data from a machine (1), comprising the following steps:
- collecting image information displayed on a graphical user interface (2) of a machine (1) and transmitting the collected information to a computer unit (3) (S10);
- masking the collected information or information derived therefrom to define data regions (4a, 4b, 4c) (S11);
- extracting alphanumeric characters from at least one data region (4a, 4b, 4c) by means of a text recognition program (S12);
- writing the alphanumeric characters into a data structure (S13); and
- storing or outputting the data structure (S14),
wherein the image information is periodically collected at different points in time, so that the collected information contains information about the temporal change in the image information and wherein the collection of the image information comprises a collection of the electrical image information signals transmitted between a graphical output interface (6) of the machine (1) and the graphical user interface (2).

2. The method according to claim 1, **characterized in that** the image information is collected by sampling with a predetermined sampling frequency.

3. The method according to any of the preceding claims, **characterized in that** the collected information or information derived therefrom is processed before the extraction of alphanumeric characters by means of at least one image processing program.

4. The method according to claim 3, **characterized in that** the processing comprises filtering and/or a contrast change, in particular a color contrast change.

5. The method according to any of the preceding claims, **characterized in that**, after the text recognition, the collected information is verified in a verification step.

6. The method according to claim 5, **characterized in that** during the verification of the collected information it is determined whether the values of temporally successively collected information change more than a predetermined change threshold value.

7. The method according to claim 5 or 6, **characterized in that** on the basis of the verification step it is determined whether there is a change in the extracted alphanumeric characters when image processing parameters are changed.

8. The method according to any of the preceding claims, **characterized in that** a plurality of data sets are stored for the collection of machine data from different machine types, each data set being assigned to one or more machine types, and each data set comprising information for masking the collected information, for filtering the collected information, for the font and/or for the font size.

9. The method according to any of the preceding claims, **characterized in that** a plurality of different pages (7a, 7b, 7c) each having different image information can be displayed on the graphical user interface (2), and **in that** switching between the pages (7a, 7b, 7c) takes place in order to collect the image information of the different pages (7a, 7b, 7c).

10. The method according to any of the preceding claims, **characterized in that** graphic sections or image components are extracted from the image information and stored in the data structure.

11. A system for collecting machine data, comprising:
- a collection unit (8), by means of which image information displayed on a graphical user interface (6) of a machine (1) can be collected;
- a computer unit (3), which is coupled to the collection unit (5, 8) and which is designed to receive the information collected by the collection unit (5, 8);
wherein the computer unit (3) is designed to mask the collected information or information derived therefrom to define data regions, to extract alphanumeric characters from at least one data region by means of a text recognition program, and to write the extracted alphanumeric characters into a data structure or to output the extracted alphanumeric characters into a data stream, wherein the computer unit (3) is designed to periodically collect the image information at different points in time, so that the collected information contains information about the temporal change in the image information, wherein the collection unit is designed to collect the electrical image information signals transmitted between a graphical output interface (6) of the machine (1) and the graphical user interface (2).

12. The system according to claim 11, **characterized in that** the computer unit (3) comprises one or more data input interfaces (3.1), via which the computer unit can be coupled to one or more collection units (5, 8).

13. The system according to claim 11 or 12, **characterized in that** the computer unit (3) comprises one or more data output interfaces (3.2), via which a data structure containing alphanumeric characters or a data stream of alphanumeric characters is output.

14. The system according to claim 12 or 13, **characterized in that** each data input interface (3.1) and each data output interface (3.2) is assigned to one machine (1) each.

15. The system according to any of claims 11 to 14, **characterized in that** the computer unit (3) comprises at least one switching interface (3.3) for providing a switching signal by means of which switching between pages (7a, 7b, 7c) of the graphical user interface (2) of a machine (1) takes place.

## Revendications

1. Procédé d'acquisition des données d'une machine (1), comprenant les étapes suivantes consistant à :
- acquérir des informations d'image affichées sur une interface graphique utilisateur (2) d'une machine (1) et transmettre les informations acquises à une unité de calcul (3) (S10) ;
- masquer les informations acquises ou les informations qui en sont déduites afin de définir des zones de données (4a, 4b, 4c) (S11) ;
- extraire des caractères alphanumériques d'au moins une zone de données (4a, 4b, 4c) à l'aide d'un programme de reconnaissance de texte (S12) ;
- écrire les caractères alphanumériques dans une structure de données (S13) ; et
- stocker ou émettre la structure de données (S14),
les informations d'image étant acquises périodiquement à différents moments, de sorte que les informations acquises ont un contenu informatif sur l'évolution temporelle des informations d'image, et l'acquisition des informations d'image comprenant l'acquisition des signaux électriques d'informations d'image transmis entre une interface graphique de sortie (6) de la machine (1) et l'interface graphique utilisateur (2).

2. Procédé selon la revendication 1,
**caractérisé en ce que** l'acquisition des informations d'image s'effectue par un échantillonnage à une fréquence d'échantillonnage prédéfinie.

3. Procédé selon l'une des revendications précédentes,
**caractérisé en ce que** les informations acquises ou les informations qui en sont déduites sont traitées à l'aide d'au moins un programme de traitement d'images avant l'extraction des caractères alphanumériques.

4. Procédé selon la revendication 3,
**caractérisé en ce que** le traitement comprend un filtrage et/ou une modification du contraste, en particulier une modification du contraste des couleurs.

5. Procédé selon l'une des revendications précédentes,
**caractérisé en ce qu'**après la reconnaissance de texte, les informations acquises sont vérifiées au cours d'une étape de contrôle.

6. Procédé selon la revendication 5,
**caractérisé en ce que**, lors du contrôle des informations acquises, on détermine si les valeurs d'informations acquises successivement dans le temps varient de manière à dépasser un seuil de variation prédéfini.

7. Procédé selon la revendication 5 ou 6,
**caractérisé en ce que**, dans le cadre de l'étape de contrôle, on détermine si une variation des paramètres de traitement d'images entraîne une variation des caractères alphanumériques extraits.

8. Procédé selon l'une des revendications précédentes,
**caractérisé en ce que**, pour l'acquisition des données de machines de différents types, plusieurs ensembles de données sont mis en mémoire, chaque ensemble de données étant associé à un ou plusieurs types de machines et chaque ensemble de données comprenant des informations relatives au masquage des informations acquises, au filtrage des informations acquises, à la police de caractères et/ou à la taille des caractères.

9. Procédé selon l'une des revendications précédentes,
**caractérisé en ce que** plusieurs pages différentes (7a, 7b, 7c) contenant chacune des informations d'image différentes peuvent être affichées sur l'interface graphique utilisateur (2), et
**en ce qu'**un basculement entre les pages (7a, 7b, 7c) est effectué afin d'acquérir les informations d'image des différentes pages (7a, 7b, 7c).

10. Procédé selon l'une des revendications précédentes,
**caractérisé en ce que** des fragments graphiques ou des éléments d'image sont extraits des informations d'image et sont stockés dans la structure de données.

11. Système d'acquisition de données de machine, comprenant :
- une unité d'acquisition (8) permettant d'acquérir des informations d'image affichées sur une interface graphique utilisateur (6) d'une machine (1) ;
- une unité de calcul (3) qui est couplée à l'unité d'acquisition (5, 8) et qui est conçue pour recevoir les informations acquises par l'unité d'acquisition (5, 8) ;
l'unité de calcul (3) étant conçue pour masquer les informations acquises ou les informations qui en sont déduites afin de définir des zones de données, pour extraire des caractères alphanumériques d'au moins une zone de données à l'aide d'un programme de reconnaissance de texte, et pour écrire les caractères alphanumériques extraits dans une structure de données ou pour émettre les caractères alphanumériques extraits dans un flux de données, l'unité de calcul (3) étant conçue pour acquérir les informations d'image périodiquement à différents moments, de sorte que les informations acquises ont un contenu informatif sur l'évolution temporelle des informations d'image, l'unité d'acquisition étant conçue pour acquérir les signaux électriques d'informations d'image transmis entre une interface graphique de sortie (6) de la machine (1) et l'interface graphique utilisateur (2).

12. Système selon la revendication 11,
**caractérisé en ce que** l'unité de calcul (3) comporte une ou plusieurs interfaces d'entrée de données (3.1) permettant de coupler l'unité de calcul à une ou plusieurs unités d'acquisition (5, 8).

13. Système selon la revendication 11 ou 12,
**caractérisé en ce que** l'unité de calcul (3) comporte une ou plusieurs interfaces de sortie de données (3.2) permettant d'émettre une structure de données contenant des caractères alphanumériques ou un flux de données constitué de caractères alphanumériques.

14. Système selon la revendication 12 ou 13,
**caractérisé en ce que** chaque interface d'entrée de données (3.1) et chaque interface de sortie de données (3.2) est associée à une machine respective (1).

15. Système selon l'une des revendications 11 à 14,
**caractérisé en ce que** l'unité de calcul (3) comporte au moins une interface de basculement (3.3) destinée à fournir un signal de basculement au moyen duquel s'effectue un basculement entre les pages (7a, 7b, 7c) de l'interface graphique utilisateur (2) d'une machine (1).
